# EUROPEAN PATENT APPLICATION

(11) **EP 4 659 827 A1**
(43) Date of publication of application: **10.12.2025**
(21) Application number: 24750249.5
(22) Date of filing: 30.01.2024
(51) Int. Cl.: A63F 1/06

(54) **GAME TABLE SYSTEM**

(30) Priority: 31.01.2023 JP 2023013505
(71) Applicant: ANGEL GROUP CO., LTD., Higashiomi-shi Shiga 527-0232 (JP)
(72) Inventor: SHIGETA, Yasushi, Higashiomi-shi, Shiga 527-0232 (JP)
(74) Representative: Bardehle Pagenberg Partnerschaft mbB Patentanwälte Rechtsanwälte
(86) International application number: PCT/JP2024/002756
(87) International publication number: WO 2024/162300

(57) **Abstract**

The present invention provides a novel gaming table system configured to recognize which player makes which bet on a gaming table by image recognition.
A gaming table system includes: a first correlating means (133) configured to correlate a chip (506) and a player (503) based on a recognized position of the chip (506) and the body of the player (503); an ID identifying means (134) configured to identify a player ID of the player (503) sitting at a gaming table (501); a combination determining means (136) configured to determine a combination of the player ID and a reference image of the player (503); a second correlating means (137) configured to identify the player ID of the player (503) shown in an image based on a determined plurality of combinations, and correlate the player ID and the player (503) shown in the image; a chip operating player identifying portion (138) configured to identify the player ID of the player operating the chip (506), based on correlations between the player (503) and the player ID and between the player (503) and the chip (506).

## Description

### CROSS-REFERENCE OF RELATED APPLICATIONS

This application claims the benefit of Japan Patent Application No. 2023-013505 filed in Japan on January 31, 2023, the contents of which applications are incorporated herein by reference.

### TECHNICAL FIELD

The present invention relates to a gaming table system applied to a gaming table in which a game is to be played using a gaming chip.

### BACKGROUND

Previously, for a gaming table in which a game is to be played using a gaming chip, a system configured to recognize a chip bet by a player is proposed. A system configured to recognize a player playing at the gaming table is also proposed. By linking the recognized chip to the recognized player, it is possible to recognize a bet amount of each player and perform patron rating and illicitness detection.

However, in the previous system, in a case trying to configure a system configured to image the bet gaming chip and the player betting the gaming chip by a camera and perform image recognition to recognize which player bet which gaming chip, it is necessary to learn images of players in order to recognize the player.

It is practically difficult to prepare such learning images for all players who may come to a casino and play a game and perform learning. Even if it is possible to learn the images of all players who may come to the casino and play the game, the processing burden is high in performing player recognition targeting all learned players when actually recognizing the player.

### SUMMARY OF THE INVENTION

The purpose of the present invention is to provide a novel gaming table system configured to recognize which player makes which bet on a gaming table by image recognition.

A gaming table system has a configuration comprising: a first camera configured to image a chip placed on a gaming table in a casino; a chip recognizing means configured to recognize a position, type, and number of chip on the gaming table by performing image recognition using AI technology to an image imaged by the first camera; a second camera configured to image a player playing a game at the gaming table to generate an image; a body recognizing means configured to recognize a body of the player playing the game on the gaming table by performing image recognition using AI technology to the image imaged by the second camera; a first correlating means configured to correlate the chip recognized by the chip recognizing means and the player whose body is recognized by the body recognizing means with each other, based on the position of the chip recognized by the chip recognizing means and the body of the player recognized by the body recognizing means; an ID identifying means configured to identify a player ID of the player sitting at the gaming table; a reference image acquiring means configured to acquire a reference image of the player sitting at the gaming table; a combination determining means configured to determine a combination of the player ID of the player identified by the ID identifying means and the reference image of the player acquired by the reference image acquiring means; a second correlating means configured to identify the player ID of the player shown in the image imaged by the second camera based on a plurality of combinations determined by the combination determining means for a plurality of players sitting at the gaming table, and correlate the identified player ID and the player shown in the image imaged by the second camera with each other; a chip operating player identifying portion configured to identify the player ID of the player operating the chip, based on a correlation between the player and the player ID by the second correlating means and a correlation between the player and the chip by the first correlating means; and a recording means configured to store the player ID identified by the chip operating player identifying means and the type and number of chip recognized by the chip recognizing means so as to be in association with each other, or record the player ID identified by the chip operating player identifying means and a total amount based on the type and number of chip recognized by the chip recognizing means so as to be in association with each other.

In the above gaming table system, the ID identifying means may be configured to identify the player ID by reading the player ID of the player from a membership card of the player sitting at the gaming table.

In the above gaming table system, the ID identifying means may be configured to identify the player ID of the player sitting at the gaming table by performing image recognition using AI technology on an image imaging the player sitting at the gaming table.

In the above gaming table system, the reference image acquiring means may be configured to acquire the image used by the ID identifying means to identify the player ID, as the reference image for the player.

In the above gaming table system, the ID identifying means may be configured to use another image imaged by the second camera before or after the image to identify the player ID of the player in the another image, when the ID identifying means cannot identify the player ID of the player sitting at the gaming table by the image recognition.

The above gaming table system may further comprise a database configured to store a player ID of a registered player and a reference image so as to be in association with each other, and the combination determining means may be configured to determine the combination of the player ID and the reference image by referring to the database using the player ID identified by the ID identifying means.

In the above gaming table system, the reference image acquiring means may be configured to acquire the reference image of the player by imaging the player whose player ID is identified by the ID identifying means.

In the above gaming table system, the reference image acquiring means may be configured to acquire the reference image of the player by receiving a designation of the player from a dealer with respect to an image acquired by imaging the player whose player ID is identified by the ID identifying means and cutting out a partial image of the designated player, and the combination determining means may be configured to combine, for the player, the player ID identified by the ID identifying means with the reference image of the player acquired by the reference image acquiring means.

In the above gaming table system, the reference image acquiring means may be configured to acquire, as the reference image of the player, the image of the player to which correlating by the second correlating means is not performed with respect to the image obtained by imaging the player whose player ID is identified by the ID identifying means, and the combination determining means may be configured to combine, for the player, the player ID identified by the ID identifying means with the reference image of the player obtained by the reference image acquiring means.

The above gaming table system may further comprise a database configured to store a player ID of a registered player and a reference image so as to be in association with each other, the ID identifying means may be configured to identify the player ID of the player by reading a player ID of the player from a membership card of the player for a new registration when the player whose player ID and reference image are not stored in the database sits at the gaming table, the reference image acquiring means may be configured to acquire the reference image of the player by imaging the player whose player ID is identified by the ID identifying means, the database may be configured to store the player ID of the newly registered player identified by the ID identifying means and the reference image of the player acquired by the reference image acquiring means so as to be in association with each other, and the combination determining means may be configured to determine the combination by referring to the database for the player sitting at any gaming table in the casino after the player is registered in the database.

In the above gaming table system, the reference image acquiring means may be configured to acquire a plurality of reference images for the same player, and the combination determining means may be configured to combine the plurality of reference images with the same player ID.

In the above gaming table system, the reference image acquiring means may be configured to acquire a new reference image for the player after the combination determining means determines the combination of the player ID and the reference image for the player, and the combination determining means may be configured to replace the reference image to be combined with the player ID with the new reference image.

In the above gaming table system, the combination determining means may be configured to exclude a combination of a player away from the gaming table from the combination used for correlating by the second correlating means.

In the above gaming table system, the second correlating means may be configured to identify a player who would be in the casino, make the combination of the identified player a candidate, and correlate the identified player ID and the player shown in the image imaged by the second camera with each other.

In the above gaming table system, the second correlating means may be configured to identify the player ID of the player shown in the image imaged by the second camera based also on combinations determined by the combination determining means for a plurality of players sitting at another gaming table within the casino.

The above gaming table system may further comprise a database configured to store a player ID of a registered player and a reference image so as to be in association with each other, and the reference image acquiring means may be configured to refer to the database to identify the reference image of the player in the image imaged by the second camera.

In the above gaming table system, the second correlating means may be configured to, in a case where the second correlating means cannot correlate the identified player ID and the player shown in the image imaged by the second camera, use another image imaged by the second camera before or after the image to correlate the player shown in the another image and the identified player ID with each other.

The above gaming table system may further comprise: a display means configured to display the reference image identified in the reference image acquiring means; and an input receiving means configured to receive an input for approval or rejection from a dealer with respect to the reference image displayed on the display means, and the reference image acquiring means may be configured to acquire the reference image of the player by imaging the player for which the input for the rejection is received by the input receiving means, and store the reference image and the player ID of the player so as to be in association with each other in the database.

In the above gaming table system, the chip recognizing means may include: a first chip recognizing means configured to recognize the position of a chip from an image generated by imaging the chip on the gaming table; and a second chip recognizing means configured to recognize the type and number of a chip from an image generated by imaging the chip on the gaming table system.

In the above gaming table system, the chip recognizing means may be configured to recognize the position, type, and number of a chip by reading the RFID tag embedded in the chip, the body recognizing means may be configured to recognize the position of the player playing the game on the gaming table based on the image, and the first correlating means may be configured to correlate the player and the chip with each other based on the position of the player recognized by the body recognizing means and the position of chip recognized by the chip recognizing means.

### BRIEF DESCRIPTION OF DRAWINGS

FIG. 1 is a view showing a gaming table in a casino to which a gaming table system is applied according to embodiments of the present invention.
FIG. 2 is a block diagram showing a gaming table system according to a first embodiment of the present invention.
FIG. 3 is a view showing an example of a first image imaged by a first camera according to the first embodiment of the present invention.
FIG. 4 is a view showing a detection result of chip stacks by a chip recognizing portion according to the first embodiment of the present invention.
FIG. 5 is a view showing an example of a partial image of the chip stack detected by the chip recognizing portion according to the first embodiment of the present invention.
FIG. 6 is a view showing a result of body recognition by a body recognizing portion according to the first embodiment of the present invention.
FIG. 7 is a view showing a second image in which a detection frame of a gaming chip is mapped.
FIG. 8 is a view showing a result in which a player and a player ID are correlated by a second correlating portion according to the first embodiment of the present invention.
FIG. 9 is a view showing a result in which the stack of gaming chips and the player ID are correlated with each other by the chip operating player identifying portion according to the first embodiment of the present invention.
FIG. 10 is a block diagram showing a configuration of a gaming table system according to a second embodiment of the present invention.
FIG. 11 is a block diagram showing a configuration of a gaming table system according to a third embodiment of the present invention.
FIG. 12 is a block diagram showing a configuration of a gaming table system according to a fourth embodiment of the present invention.
FIG. 13 is a block diagram showing a configuration of a gaming table system according to a fifth embodiment of the present invention.

### DESCRIPTION OF THE PREFERRED EMBODIMENTS

Embodiments according to the present invention are described with reference to the drawings below. The embodiments described below are examples in cases implementing the present invention, and are not what limits the present invention to the specific configurations described below. In implementing the present invention, the specific configurations according to the embodiments may be adopted appropriately.

### (First embodiment)

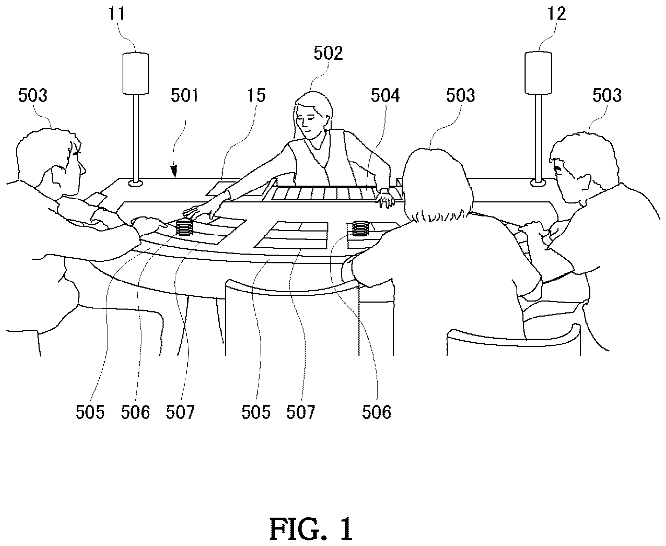

FIG. 1 is a view showing a gaming table in a casino to which a gaming table system is applied according to embodiments of the present invention. As shown in FIG. 1, a dealer 502 is positioned on one side of a gaming table 501, and a plurality of players 503 sits at the gaming table 501 so as to face the dealer 502. In the gaming table 501, a chip tray 504 for storing gaming chips of the dealer 502 is provided in front of the dealer 502, and a player position 505 is provided on the side of each player 503.

Each player position 505 is provided with a betting area 507 on which the player 503 sitting at the player position 505 is to bet gaming chips (hereinafter simply referred to as "chips"). In the present embodiment, the gaming table 501 is a gaming table for baccarat, and a plurality of betting targets such as a player, banker, tie, etc. are defined in the betting area 507 at each player position 505.

A first camera 11 for imaging the chips 506 on the gaming table 501 and a second camera 12 for imaging the players 503 and chips 506 are installed on the gaming table 501. The first camera 11 and the second camera 12 are mounted on poles on the gaming table 501 and image the chips 506 on the gaming table 501 from obliquely above.

The gaming table 501 is provided with a touch panel 15 on which the dealer 502 performs a touch operation.

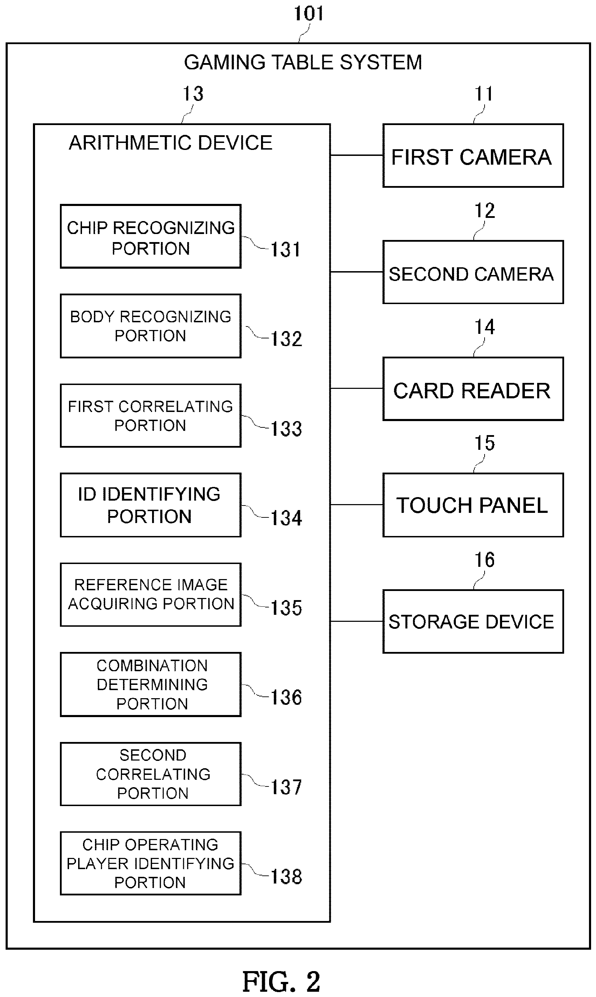

FIG. 2 is a block diagram showing a gaming table system according to a first embodiment of the present invention. As shown in FIG. 2, a gaming table system 101 according to the present embodiment includes the first camera 11, the second camera 12, an arithmetic device 13, a card reader 14, the touch panel 15, and a storage device 16. The arithmetic device 13 includes a chip recognizing portion 131, a body recognizing portion 132, a first correlating portion 133, an ID identifying portion 134, a reference image acquiring portion 135, a combination determining portion 136, a second correlating portion 137, and a chip operating player identifying portion 138. Each function of the arithmetic device 13 may be realized by executing computer programs according to the present embodiment by a computer comprising a processor, memory, and storage device.

The first camera 11 images the chips 506 placed on the gaming table 501 to generate a first image. The first camera 11 images a table surface of the gaming table 501 including the plurality of betting areas 507 from obliquely above. Thereby, the plurality of betting areas 507 is shown in a depth direction as viewed from the first camera 1, a stack of chips 506 that are relatively near and whose looking-down angle is relatively large and a stack of chips 506 that are relatively far and whose looking-down angle is relatively small are shown. The first camera 11 may image continuously to generate a series of images, or it may perform imaging by a predetermined trigger to generate an image.

The second camera 12 images the players 503 playing a game at the gaming table 501 and the chips 506 placed on the gaming table 501 to generate a second image. An imaging direction and angle of view of the second camera 12 is set such that a face of the player 503 playing the game on the gaming table 501 is shown.

The first camera 11 and second camera 12 are separated on the left and right and each installed on a different pole, but the first camera 11 and second camera 12 may be installed on the upper and lower of the same pole.

The card reader 14 is operated by the dealer 502 to read a player ID from a membership card received from the player 503 sitting at the gaming table 501. The membership card is issued to the player 503 registered as a member, and the player ID is stored in the membership card.

The touch panel 15 is installed in front of the dealer 502 such that the dealer 502 can check various information. In the example in FIG. 1, the touch panel 15 is embedded in the gaming table 501, but, instead of this, it may be provided so as to stand on the gaming table 501. The touch panel 15 has a function of receiving touch input, particularly, receiving touch input from the dealer 502 when the dealer 502 designates the player 503 whose membership card is read by the dealer 502, as described below. That is, the touch panel 15 functions as a display means and also functions as an input receiving means.

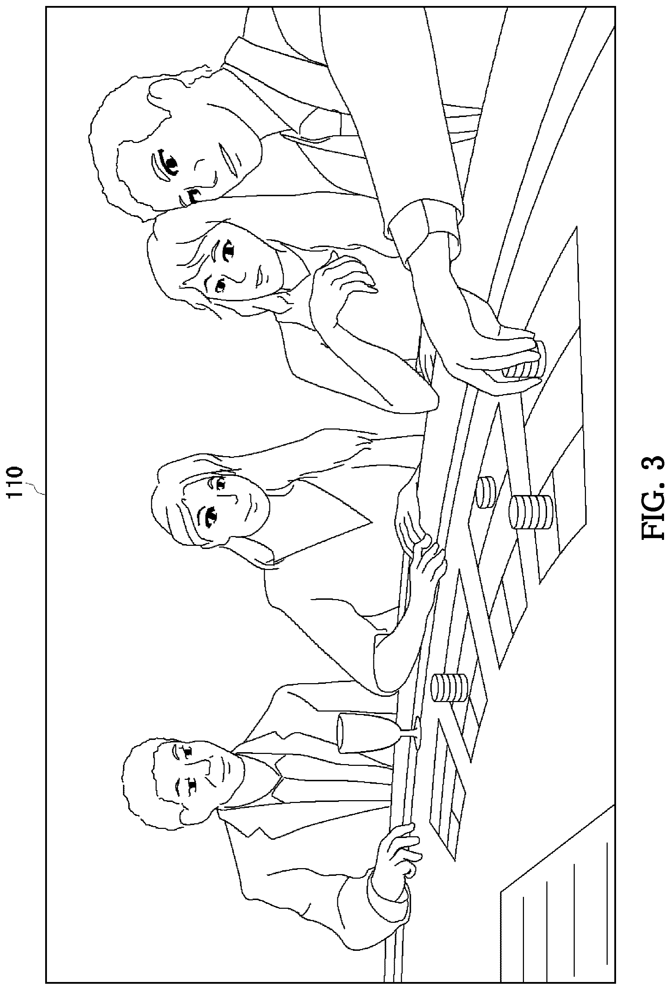

FIG. 3 is a view showing an example of the first image imaged by the first camera according to the first embodiment of the present invention. As shown in FIG. 3, in a first image 110, the plurality of players 503 sitting at the gaming table 501 and stacks of chips 506 (chip stacks) which those players 503 bet on the betting area 507 are shown.

As described above, the first camera 11 images the plurality of betting areas 507 from obliquely above, thereby, in the first image 110, the top surface of the topmost chip 506 of the chip stack and the side surfaces of all chips 506 of the chip stack are shown. Moreover, in the first image 110, relatively near betting area 507 and relatively far betting area 507, and the chips 506 bet on those betting areas 507 are shown. The chips 506 of relatively far chip stacks are shown relatively small, and the chips 506 of relatively near chip stacks are shown relatively large.

The chip recognizing portion 131 performs image recognition using AI technology to the first image 110 obtained by the first camera 11, thereby recognizing positions, types, and number of chips 506 on the gaming table 501. For this purpose, the chip recognizing portion 131 includes a first chip recognizing portion configured to recognize the positions of chips 506 from the first image 110 and a second chip recognizing portion configured to recognize the types and number of chips 506 from the first image 110. The first chip recognizing portion detects the chip stack from the first image 110, thereby identifying the position of the chip stack on the gaming table 501.

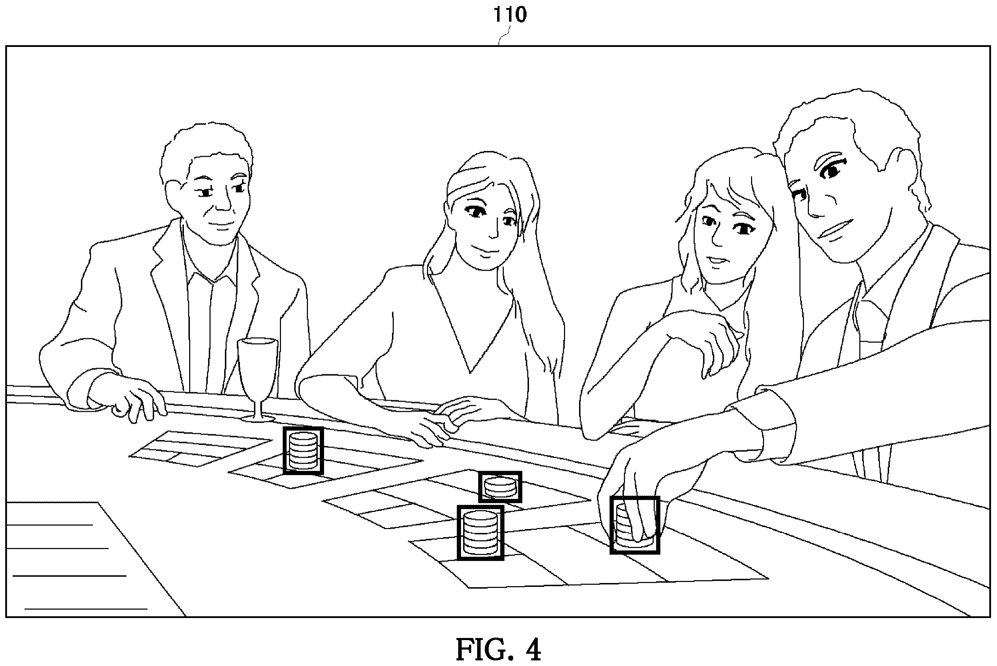

FIG. 4 is a view showing a detection result of the chip stacks by the chip recognizing portion according to the first embodiment of the present invention. As shown in FIG. 4, the first chip recognizing portion of the chip recognizing portion 131 surrounds areas of the chip stacks in the first image 110 with rectangular detection frames, thereby cutting out partial images of the chip stacks. When the chip stack is in the betting area 507, the first chip recognizing portion judges which of the betting targets the chip stack is specifically on in the betting area 507. Specifically, the first chip recognizing portion estimates, for example, the center position of the lowest chip 506 in the detected chip stack to determine which of the betting target areas on the gaming table 501 corresponds to the center position.

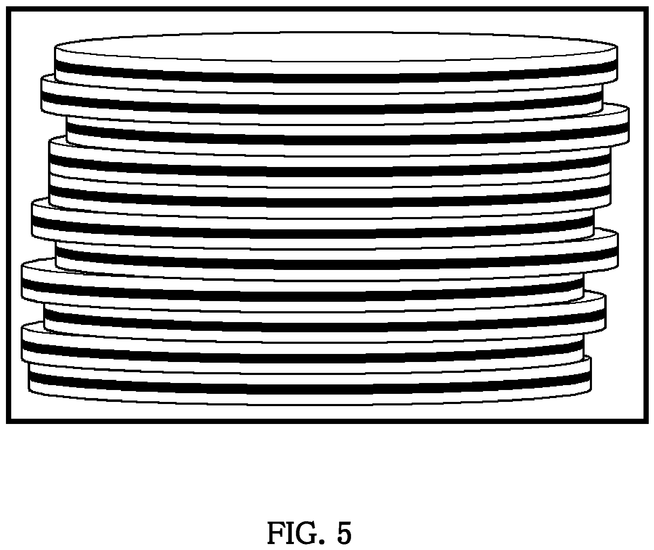

FIG. 5 is a view showing an example of the partial image of the chip stack detected by the chip recognizing portion according to the first embodiment of the present invention. The chip 506 according to the present embodiment includes a center line on the side surface. The color of the center line represents the type (value) of the chip 506. Then, the second chip recognizing portion of the chip recognizing portion 131 detects the center line from the partial image of the chip stack and determines the color thereof. Thereby, the second chip recognizing portion judges the number of chips 506 by the number of detected center lines and judges the type of each chip 506 based on the color of the detected center lines.

In the present embodiment, as described above, the chip recognizing portion 131 identifies the position of stack of the chips 506 by the first chip recognizing portion and the types and number of chips 506 of each stack by the second chip recognizing portion, but, as an alternative to this, the chip recognizing portion 131 identifies the position of the stack of gaming chips 506 and also the types and number of chips 506 of the stack, using a single recognition engine.

The body recognizing portion 132 performs image recognition using AI technology to the second image obtained by the second camera 12, thereby recognizing the body of the player 503 playing the game at the gaming table 501. The second camera 12 continuously images at a predetermined frame rate, thereby generating continuous second images arranged in chronological order, and the body recognizing portion 132 performs image recognition to each of the continuous second images to recognize the body of the player 503.

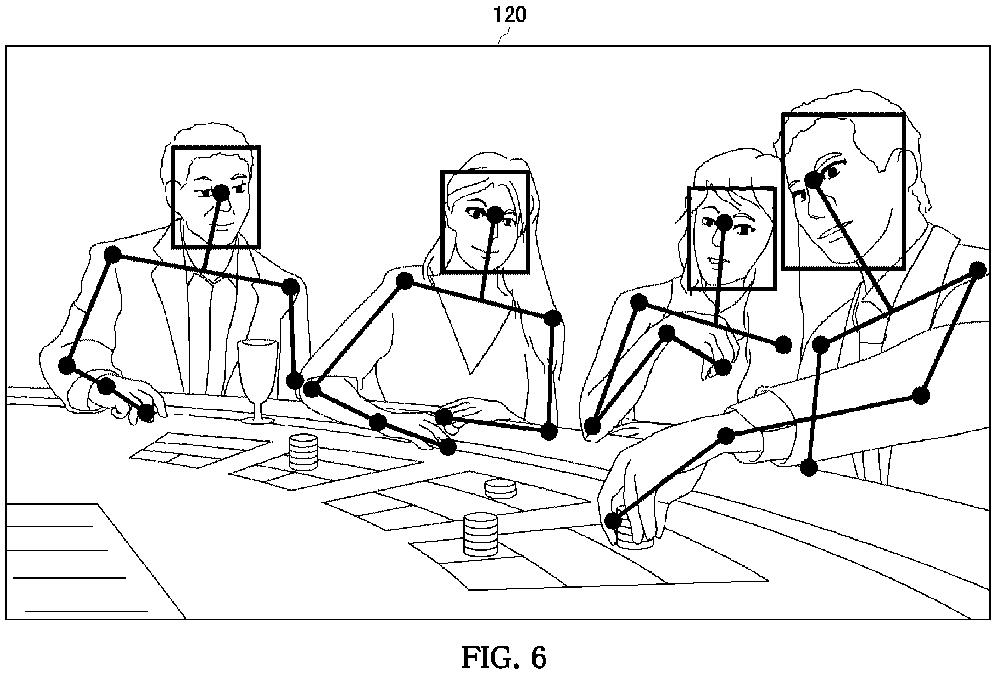

FIG. 6 is a view showing a result of the body recognition by the body recognizing portion according to the first embodiment of the present invention. For convenience, in FIG. 6, a second image 120 with the same contents as those of the first image 110 is shown as an example, but, as mentioned above, since the installed positions and directions of the first camera 11 and the second camera 12 are different from each other, the images including the same content are not actually generated as the first image 110 and the second image 120.

The body recognizing portion 132 performs pose tracking to the second image 120, thereby detecting predetermined characteristic parts of the body (face (center of both eyes), both shoulders, both elbows, both wrists, and fingers of both hands) for each player 503 to generate a skeletal model of the player 503. In FIG. 6, black dots are the detected characteristic body parts of the player 503, and the skeletal model is generated by connecting the black dots for each player 503. Any existing technology can be used for such pose tracking. The body recognizing portion 132 further detects the face of the player 503 as the body part of the player 503 and surrounds it with a rectangular detection frame, and combines the detection frame and the skeletal model for each player 503 to recognize it as the body of the player 503.

The first correlating portion 133 correlates the chip 506 recognized by the chip recognizing portion 131 and the player 503 whose body is recognized by the body recognizing portion 132 with each other, based on the positions of chips 506 recognized by the chip recognizing portion 131 and the body of the player 503 recognized by the body recognizing portion 132. For this purpose, the first correlating portion 133 maps the detection frame of the chips 506 detected from the first image 110 on the second image 120 in which the body is recognized. The mapping may be performed based on an alignment of the first camera 11 and the second camera 12, or for example, the mapping may be performed on the basis of the betting area 507 in the image. Contrary to this, the first correlating portion 133 may map the detection frame detecting the face and the skeletal model recognized in the second image 120 on the first image 110.

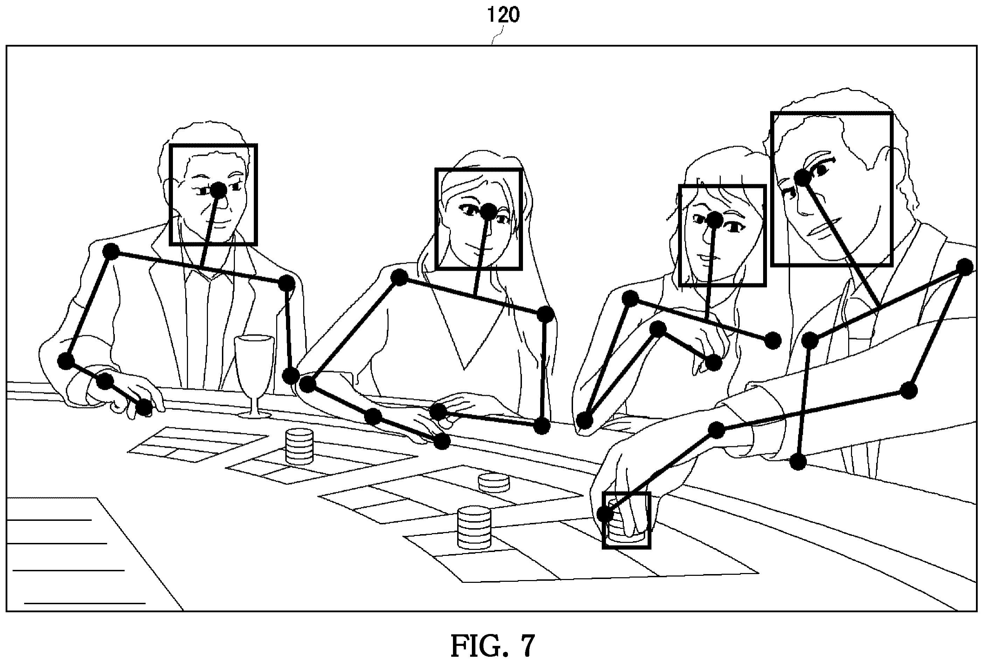

FIG. 7 is a view showing the second image in which the detection frame of the gaming chips is mapped. The first correlating portion 133 maps the detection frame of the chips 506 at the timing when the chips 506 appear in the first image 110 among the first images 110 imaged continuously in chronological order, on the second image 120 at that timing. Instead of this, the first correlating portion 133 may map the detection frame of the chips 506 detected from the first image 110 at the timing when the position of the detection frame of the chips 506 no longer changes, on the second image 120 at that timing.

The first correlating portion 133 correlates the player 503 whose fingers are closest to the detection frame of the chips 506 to the detection frame of the chips 506 in the second image 120 in which the detection frame of the chips 506 is mapped. In this way, the first correlating portion 133 correlates the chips 506 recognized by the chip recognizing portion 131 and the player 503 whose body is recognized by the body recognizing portion 132 with each other. At this time point, the contents of the chips 506 (positions, types, and number of chips) and the player 503 are correlated with each other, but this is only that both of them are correlated in the image, and who the player 503 shown in the image is, that is, the player ID of the player 503 is not specified.

For the other stacks of chips 506 shown in FIG. 7, the above correlation is made in different timing frames.

The ID identifying portion 134 identifies the player ID of the player 503 sitting at the gaming table 501. In the present embodiment, the ID identifying portion 134 reads the player ID of the player 503 from a membership card of the player 503 sitting at the gaming table 501 at the card reader 14 and obtains a result of this reading from the card reader 14, thereby identifying the player ID.

The reference image acquiring portion 135 acquires a reference image of the player 503 sitting at the gaming table 501. In the present embodiment, the reference image acquiring portion 135 acquires a partial image of the face detected from the body recognizing portion 132 and makes it the reference image of the player 503.

The combination determining portion 136 determines a combination of the player ID of the player 503 identified by the ID identifying portion 134 and the reference image of the player 503 acquired by the reference image acquiring portion 135. As shown in FIG. 6, when there is a plurality of faces in the second image 120, the body recognizing portion 132 detects the plurality of faces. Therefore, as it is, it is not known which of the players 503 whose faces are detected the player ID read by the card reader 14 is the player ID of.

Then, when the dealer 502 reads the player ID from the membership card at the card reader 14, in synchronization therewith, the touch panel 15 displays a screen illustrated in FIG. 6 as an example, which is the detection result of the faces from the second image 120. The dealer 502 taps the face of the player 503 whose membership card is read, in the face detection result displayed on the touch panel 15, thereby designating the player 503 corresponding to the read player ID (i.e., the player 503 newly sitting at the gaming table 501).

The combination determining portion 136 receives this designation from the touch panel 15, thereby determining a combination of the player ID of the player 503 read from the membership card and the face image (reference image) of the player 503.

The second correlating portion 137 identifies the player ID of the player 503 shown in the second image 120 imaged by the second camera 12 based on a plurality of combinations of player IDs and reference images determined by the combination determining portion 136 for the plurality of players 503 sitting at the gaming table 501, and correlates the identified player IDs and the players 503 shown in the second image 120 imaged by the second camera 12 with each other.

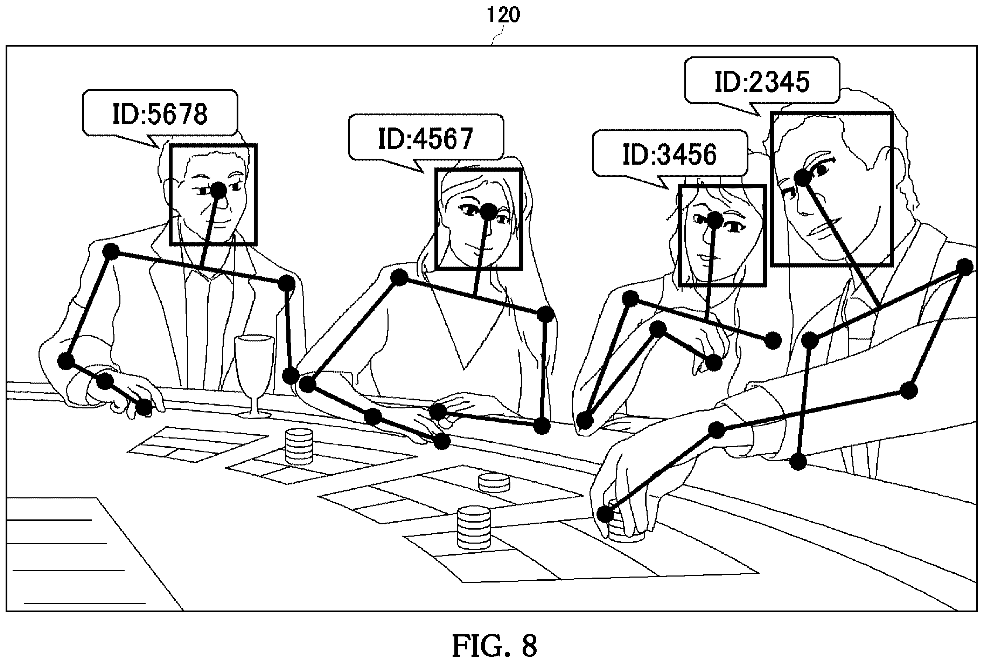

FIG. 8 is a view showing a result in which the player and the player ID are correlated with each other by the second correlating portion according to the first embodiment of the present invention. As shown in FIG. 8, the player 503 recognized in the second image 120 and the player ID are correlated with each other by the second correlating portion 137. For this purpose, when the body recognizing portion 132 detects the face from the second image 120 and the partial image of the face (face image) is obtained, the second correlating portion 137 selects the closest reference image to the face image among the plurality of reference images obtained by the reference image acquiring portion 135 for the gaming table 501. The second correlating portion 137 then correlates the player ID combined with the selected reference image to the face of the partial image.

The chip operating player identifying portion 138 identifies the player ID of the player 503 operating the gaming chips 506 based on the correlating between the player 503 and the player ID by the second correlating portion 137 and the correlating between the player 503 and the chips 506 by the first correlating portion 133. As described above, in the first correlating portion 133, the player 503 whose fingers are closest to the chips 506 at the timing when the chips 506 are detected is correlated to the chips 506 (see Fig. 7), and, in the second correlating portion 137, the player IDs are correlated to the players 503 in the second image 120 (see FIG. 8).

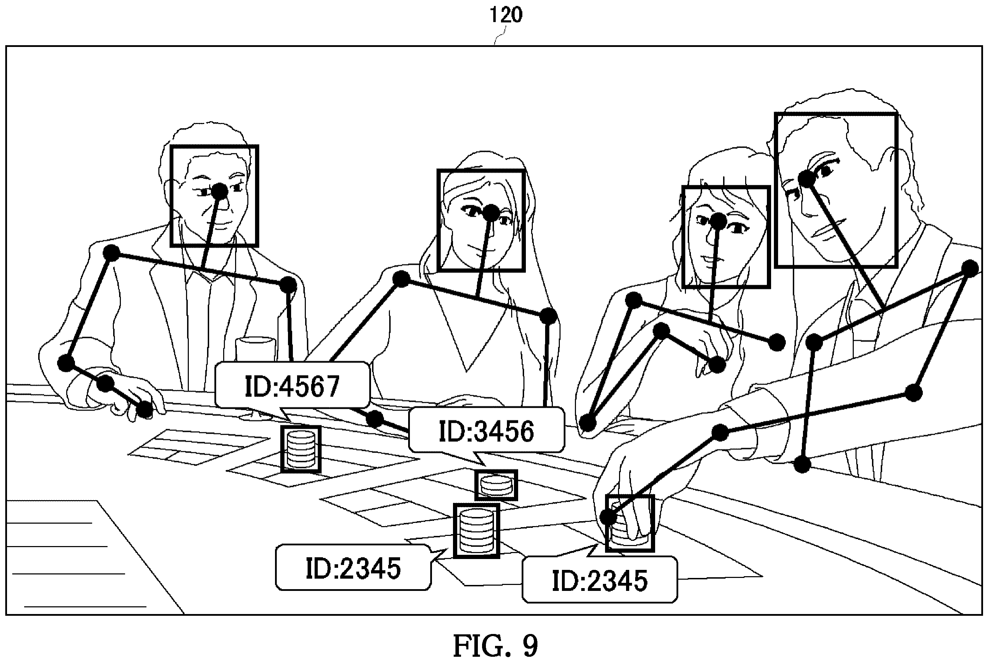

FIG. 9 is a view showing the result in which the stack of gaming chips and the player ID are correlated with each other by the chip operating player identifying portion according to the first embodiment of the present invention. The chip operating player identifying portion 138 correlates the stack of chips 506 and the player ID based on the respective correlating by the first correlating portion 133 and the second correlating portion 137 to identify the player ID of the player 503 who is operating (placing) the stack of chips 506. Thereby, it is possible to identify which player 503 bets the stack of chips 506 recognized on the gaming table 501.

The storage device 16 stores the player ID identified by the chip operating player identifying portion 138 and the types and number of chips 506 recognized by the chip recognizing portion 131 so as to be in association with each other. Instead of or in addition to the types and number of chips 506, the storage device 16 may record a total amount based on the types and number of chips 506 so as to be in association with the player ID. Thereby, it is possible to grasp a betting amount of each player 503 on the gaming table 501, and it can be useful for patron rating and illicitness detection.

### (Second embodiment)

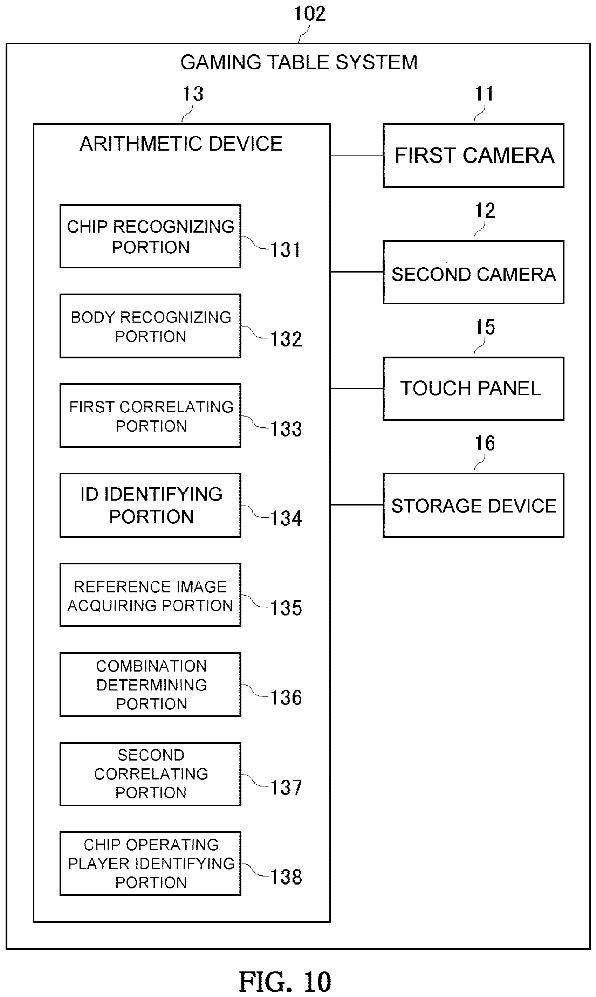

FIG. 10 is a block diagram showing a configuration of a gaming table system according to a second embodiment of the present invention. In the present embodiment, a gaming table system 102 identifies the player ID of the player 503 sitting at the gaming table 501 by facial recognition. That is, in the present embodiment, the ID identifying portion 134 performs image recognition using AI technology to the image of the player 503 sitting at the gaming table 501, thereby identifying the player ID of the player 503 sitting at the gaming table 501. For this purpose, the ID identifying portion 134 includes a face recognition engine which learns face images of registered players 503 in advance. For this face recognition engine, as AI technology, for example, deep learning technology or SVM (support vector machine) may be used. The image used for face recognition in the ID identifying portion 134 may be imaged by the second camera 12.

The reference image acquiring portion 135 acquires the face image imaged by the second camera 12 and used for face recognition as it is as the reference image. The second correlating portion 137 selects the closest reference image to the face image extracted from the second image 120 imaged by the second camera 12, thereby performing the matching between the reference image and the face image, as similar to the first embodiment, but the face image not matched with any reference image is what the reference image is not yet prepared for. Then, the ID identifying portion 134 performs processing of identifying the player ID by face recognition for the face image not matched by the second correlating portion 137.

According to the present embodiment, although it is necessary to learn the facial images for the players 503 in advance, in actual operation, the player 503 does not need to present the membership card to the dealer 502 when sitting at the gaming table 501, and the dealer 502 does not need to scan the membership card with the card reader, thereby it is possible to try to make operation more efficient. In other words, in the present embodiment, it may be that an operation performing imaging the player 503 for facial recognition instead of issuing the membership card or in addition to this.

### (Third embodiment)

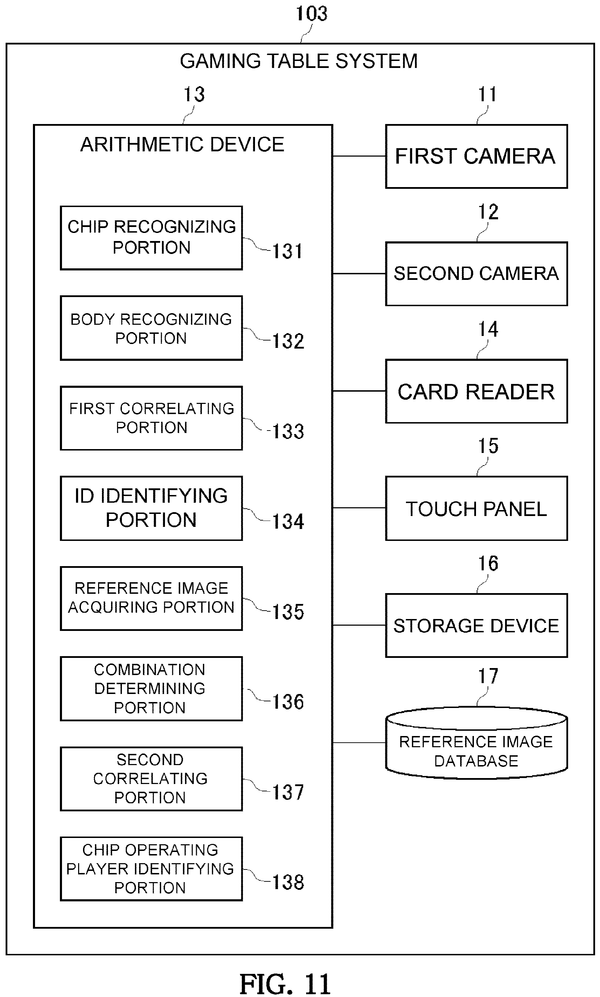

FIG. 11 is a block diagram showing a configuration of a gaming table system according to a third embodiment of the present invention. In the present embodiment, a gaming table system 103 includes a reference image database 17. In the reference image database 17, player IDs of registered players 503 and reference images are stored so as to be in association with each other. In the first and second embodiments, the reference image acquiring portion 135 acquires the reference image of the player 503 sitting at the gaming table 501, but, in the present embodiment, the player 503 is in a registration system, and the reference image acquiring portion 135 acquires a reference image of player 503 to be newly registered.

As the reference image to be obtained for the player 503 to be registered, a plurality of reference images may be for each player 503. That is, in the reference image database 17, a plurality of reference images whose imaging angles are different from each other may be correlated to one player 503.

The combination determining portion 136 refers to the reference image database 17 using the player ID identified by the ID identifying portion 134 and identifies the reference image correlated with the player ID, thereby determining the combination of the player ID and the reference image. In the present embodiment, the ID identifying portion 134 may identify the player ID by reading the membership card by the card reader 14 as in the first embodiment, or may identify the player ID by facial recognition as in the second embodiment.

### (Fourth embodiment)

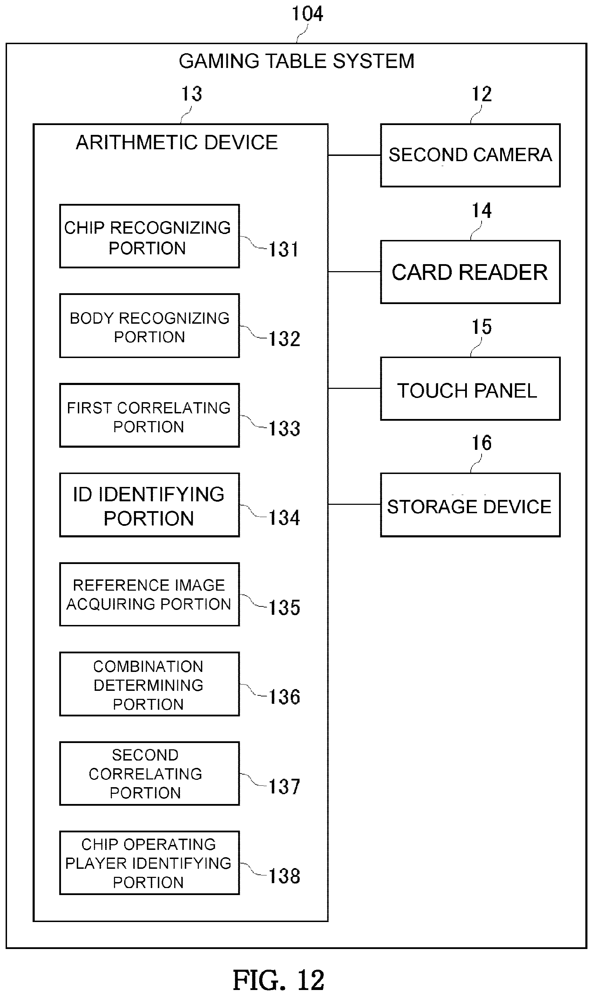

FIG. 12 is a block diagram showing a configuration of a gaming table system according to a fourth embodiment of the present invention. In the above embodiment, the camera for imaging the first image 110 for recognizing the types and number of chips 506 and the camera for imaging the second image 120 for pose tracking of the player 503 are installed as separate cameras, but, in the gaming table system 104 according to the present embodiment, they may be one camera (in the example of FIG. 12, the second camera 12).

In this case, the chip recognizing portion 131 performs image recognition to the second image 120 imaged by the second camera 12 to recognize the chips 506, and the body recognizing portion 132 also performs image recognition on the same second image 120 to generate the skeletal model and detect the facial region.

In the above embodiment, a relatively narrow angle of view is set to the first camera 11 so as to image the chips 506 placed on the betting area 507 of the gaming table 501, a relatively wide angle of view is set to the second camera 12 such that the face of the player 503 and the hand thereof extended to the betting area 507 are sufficiently shown. In the present embodiment, a relatively wide angle of view is also set such that the face of the player 503 and the hand thereof extended to the betting area 507 are sufficiently shown. In the present embodiment, it is desirable that the number of pixels of the second camera 12 is large enough such that the chip recognizing portion 131 can sufficiently recognize the chips 506 even with the wide angle of view.

### (Fifth embodiment)

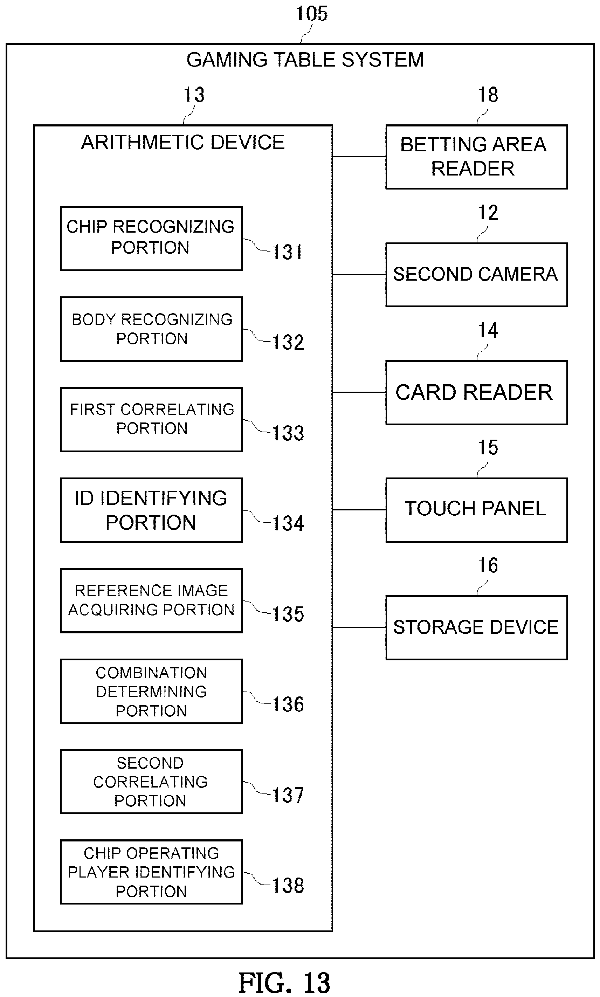

FIG. 13 is a block diagram showing a configuration of a gaming table system according to a fifth embodiment of the present invention. In the above embodiment, the camera images the chips 506 placed in the betting area 507 to generate the image, and the chip recognizing portion 131 performs image recognition to the imaged image, thereby recognizing the positions, types, and number of chips 506. In the present embodiment, an RFID tag by which information on chip's type can be identified is embedded in the chip 506, and the gaming table system 105 includes, in the betting area 507, a betting area reader 18 configured to read the RFID tags of the chips 506 placed in the betting area 507.

The betting area reader 18 is formed of an antenna installed at each betting target and a reader configured to control the antenna. Thereby, it is possible to read the RFID tags of the chips 506 for each player position 505. The chip recognizing portion 131 recognizes the positions of chips 506 for each antenna which reads the RFID tags of the chips 506, i.e., which player position 505 and which betting target the chips 506 are in. The chip recognizing portion 131 also recognizes the types and number of chips 506 placed on each betting target based on the information on the types and the number of chips 506 stored in the RFID tags read from each betting target by the betting area reader 18.

In the present embodiment, the antenna is provided for each betting target and the chips 506 placed on each betting target are read so as to be distinguished, but the antenna may be provided for each betting area 507. Even by this configuration, it is possible to recognize the types and number of chips 506 bet on each betting area 507, and recognize the betting amount of each player 503.

In the present embodiment, the body recognizing portion 132 recognizes the body of the player 503 as in the above embodiment, and also recognizes the player position 505 of the player 503 whose body is recognized. Then, the first correlating portion 133 correlates the player 503 recognized by the body recognizing portion 132 and the gaming chip 506 recognized by the chip recognizing portion 131 with each other based on the player position 505 recognized by the body recognizing portion 132 and the positions of gaming chips 506 recognized by the chip recognizing portion 131.

### (Sixth embodiment)

A gaming table system according to a sixth embodiment includes the reference image database 17 configured to store the player IDs of the registered players 503 and the reference images so as to be in association with each other, as similar to the gaming table system 103 (see FIG. 11). In the present embodiment, when a player 503 whose player ID and reference image are not stored in the reference image database 17 sits at the gaming table 501, the ID identifying portion 134 reads the player ID of the player 503 from a membership card of the player 503 for new registration, thereby identifying the player ID of the player 503.

When the ID identifying portion 134 identifies the player ID of the newly registered player 503, the reference image acquiring portion 135 images the player 503 by the second camera 12, thereby acquiring the reference image of the player 503. The reference image database 17 stores the player ID of the newly registered player 503 identified by the ID identifying portion 134 and the reference image of the player 503 acquired by the reference image acquiring portion 135 so as to be in association with each other, thereby updating the reference image database 17.

In the present embodiment, after the player 503 is registered in the reference image database 17, the combination determining portion 136 refers to the reference image database 17 to determine the combination of the player ID and the reference image for the player 503 sitting at any gaming table 501 in the casino.

According to the present embodiment, it is not necessary to image the facial image exclusively for the registration in the reference image database with respect to the player 503 playing at the casino, and after the casino introduces the gaming table system, when the player 503 sits at the gaming table 501 for the first time, it is possible to perform the registration in the reference image database for the player 503.

### (Seventh embodiment)

A gaming table system according to a seventh embodiment includes the reference image database 17 configured to store the player IDs of the registered players 503 and the reference images so as to be in association with each other, as similar to the gaming table system 103 (see Fig. 11). In the present embodiment, the reference image acquiring portion 135 refers to the reference image database 17 to identify the reference image of the player 503 shown in the image imaged by the second camera 12.

The touch panel 15 displays the reference image identified in the reference image acquiring portion 135 and receives an approval or rejection input from the dealer 502 with respect to the displayed reference image. The dealer 502 compares the reference image displayed on the touch panel 15 and the face of the player 503 actually being at the gaming table 501 with each other, and performs the approval input when recognizing the same person and performs the rejection input when recognizing a different person.

When the reference image acquiring portion 135 receives the approval input on the touch panel 15, the combination determining portion 136 determines the combination of this reference image and the player ID. When the reference image acquiring portion 135 receives the rejection input on the touch panel 15, the reference image acquiring portion 135 images the player 503 by the second camera 12, acquires the reference image of the player 503, and stores the reference image in the reference image database 17 so as to be in association with the player ID of the player 503. Then, the combination determining portion 136 determines the combination of this reference image and the player ID.

The dealer 502 may perform the rejection input when judging that the reference image displayed on the touch panel 15 does not have a sufficient quality to use it as the reference image. Furthermore, the dealer 502 may perform the rejection input when the reference image and the appearance of the actual player 503 are significantly different even when recognizing that the reference image and the actual player 503 are the same person. In sum, the dealer 502 may perform the rejection input when judging that the reference image in the reference image database 17 should be updated.

According to the present embodiment, when the reference image of the player 503 is not registered in the reference image database 17, or when the reference image of the player 503 is registered in the reference image database 17 but the reference image is desired to be updated, it is possible to newly register (update) the image of the player 503 imaged on the spot in the reference image database 17 as the reference image of the player 5.

### (Eighth embodiment)

In the first embodiment, the first correlating portion 133 maps the detection frame of the chips 506 at the timing when the chips 506 appear in the first image 110 among the first image 110 continuously imaged in chronological order on the second image 120 at that timing, thereby correlating the player 503 whose body is recognized by the body recognizing portion 132 and the chips 506 with each other. Then, the second correlating portion 137 judges which the reference image determined by the combination determining portion 136 the face image of the player 503 shown in the second image 120 corresponds to, thereby correlating the player 503 shown in the second image 120 and the player ID with each other.

However, the second image 120 is not necessarily a suitable image for matching with the reference image. For example, in the case where the face of the player 503 operating the chips 506 in the second image 120 at the timing when the chips 506 appear in the first image 110 does not face forward or is not clearly shown, the second correlating portion 137 may not be able to perform the matching with the reference image.

In this case, the second correlating portion 137 may perform matching with the reference image using not the second image 120 of the timing when the chips 506 appear in the first image 110 but the second image 120 of a frame before or after that second image 120. For this purpose, the second correlating portion 137 tracks the body recognized by the body recognizing portion 132 from the second image 120 of the timing when the chips 506 appear in the first image 110 to the second image 120 of that frame, thereby it is possible to keep the correlation between the chips 506 and the body correlated by the first correlating portion 133.

According to the present embodiment, even in the case where the face of the player 503 operating the chips 506 is not shown such that the correlating by the second correlating portion 137 can be performed, in the second image 120 at the timing when the chips 506 appear in the first image 110, the second correlating portion 137 can identify the player ID of the player 503 operating the chips 506.

### (Regarding reference image)

In the gaming table system 101 according to the first embodiment, the reference image of the player 503 sitting at the gaming table 501 is prepared by the reference image acquiring portion 135, and thereafter, when the player 503 plays at the gaming table 501, the identifying the player ID of the player 503 by the second correlating portion 137 is performed using the first prepared reference image. Thereby, each time the player 503 plays the game, it is not necessary to identify the player 503 with all registered players 503 as candidates, and it is possible to select the corresponding player 503 from the players 503 prepared as the reference image of the gaming table 501 to identify the player 503.

In this way, the reference image of the player 503 is prepared when the player 503 sits at the gaming table 501, but the most appropriate reference image is not always obtained at this timing. Then, the reference image acquiring portion 135 may acquire the face image of the player 503 obtained by imaging the player 503 at any timing after the player 503 starts playing the game at the gaming table 501 as a new reference image instead of or in addition to the original reference image, thereby updating the reference image. That is, the reference image acquiring portion 135 may acquire a new reference image for the player 503 after the combination determining portion 136 once determines the combination of the player ID and the reference image for the player 503.

When the reference image acquiring portion 135 updates the reference image, the combination determining portion 136 replaces the reference image to be combined with the player ID with the updated reference image to determine the combination.

The combination determining portion 136 also excludes the combination of the player 503 that left the gaming table 501 from the combinations used for the correlating in the second correlating portion 137. Specifically, the combination determining portion 136 excludes the reference image that was not correlated in the second correlating portion 137 continuously for a predetermined number of games from the combinations. Thereby, the reference image that is no longer needed since the player 503 left the gaming table 501 is not kept forever as the candidate for the combination, and it is possible to reduce the processing load of the correlating by the second correlating portion 137 and improve the speed thereof.

In contrary to this, the second correlating portion 137 may identify the player ID of the player 503 shown in the second image 120 based also on the combination determined by the combination determining portion 136 for the plurality of players 503 sitting at another gaming table 501 in the casino. By this configuration, it is not needed to prepare a new reference image each time when the player 503 sits at a new gaming table 501, and so the processing load is reduced. Moreover, it is possible by updating the reference image as described above to use the appropriate reference image obtained when the player 503 is at another gaming table 501.

The second correlating portion 137 may make all players 503 whose reference image is obtained in any of the gaming tables 501 in the casino as the candidates for the correlating and perform the correlating when identifying the player ID for player 503 in the second image 120. Alternatively, for each gaming table 501, the combination determining portion 136 may exclude the combination of the player 503 from the candidates used for the correlating by the second correlating portion 137 and store it for a certain period of time when the player 503 left the gaming table 501, and, when the player 503 sits at another gaming table 501, another gaming table 501 may search for the corresponding combination from the combinations stored for the another gaming table 501 and use it in another gaming table 501.

### (Other variant examples)

Each function in the arithmetic device 13 may be implemented on a plurality of distributed computers, some or all functions may be in the cloud. A computer program for configuring each function in the arithmetic device 13 may be installed on a computer through a network or via a non-temporary storage medium. In the above embodiments, the gaming table system according to the embodiments of the present invention are described using a baccarat table as an example, but the gaming table system according to the embodiments of the present invention may also be applied to a gaming table other than a baccarat table, for example, a gaming table for blackjack, a roulette table, and the like.

In the above embodiments, the chip 506 includes the center line representing the type by the color on the side surface, and the chip recognizing portion 131 identifies the type of chip 506 based on the color of the center line, but, instead of or in addition to this, code information indicating identification information uniquely identifying the gaming chip 506 may be represented on the side surface of the chip 506. In this case, the chip recognizing portion 131 may identify the identifying information of the chip 506 instead of or in addition to the type. Further, the gaming table system may include a chip database and identify the types of chips 506 based on the identification information of the chips 506.

The gaming table system according to the above embodiments identifies the player 503 placing (betting) the chips 506 in the betting area 507, but, instead of or in addition to this, may identify the player 503 taking the chips 506 from the betting area 507. In this case, the first correlating portion 133 maps the detection frame of the chips 506 detected in the first image 110 at the timing immediately before the gaming chips 506 disappear among the first images 110 continuously obtained, on the second image 120. Alternatively, once the position of the stack of chips 506 recognized in the betting area 507 is moved, the detection frame of the chips 506 detected in the first image 110 at the timing immediately prior to the movement may be mapped on the second image 120.

By this configuration, when the chips 506 paid out to the player 503 who wins the game and the chips 506 bet by the player 503 are taken by the player 503, it is possible to identify the player ID of the player 503 who performs such operation.

In the above first embodiment, the screen of the detection result of the faces from the second image 120 is displayed on the touch panel 15, and the combination determining portion 136 receives the designation of the player 503 newly sitting at the gaming table 501 from the dealer 502, thereby determining the combination of the player ID and the face image of the player 503 becoming the reference image. In addition to this function, the combination determining portion 136 may have a function to output an alert when the dealer 502 mistakes the designation of the face of the player 503.

In this case, the gaming table system 101 includes the reference image database 17 configured to store the correlation between the faces of the registered players 503 and the player IDs. When a degree of agreement between the face of the player 503 designated by the dealer 502 on the touch panel 15 and the face stored in the reference image database 17 as the face of the player 503 correlated to the player ID read by the card reader 14 is low, the second correlating portion 137 performs an attention causing action. The attention causing action includes, for example, displaying a message to the effect that the degree of agreement is low, on the touch panel 15, and the like.

The gaming table system 103 according to the third embodiment includes the reference image database 17, and the combination determining portion 136 refers to the reference image database 17 using the player ID identified by the ID identifying portion 134 to identify the reference image correlated with the player ID, thereby determining the combination of the player ID and the reference image. Alternatively, the combination determining portion 136 may use the reference image correlated with the identified player ID and select the face image close to it among the plurality of face images extracted from the second image 120. In this selection, the combination determining portion 136 can use a learning-based face recognition model based on AI techniques such as deep learning, SVM, etc.

At this time, the touch panel 15 displays the selected face image and receives an approval for the selected face image from the dealer 502. The combination determining portion 136 may combine the approved face image from the dealer 502 with the identified player ID as the reference image. The dealer 502 performs an approval input to the touch panel 15 when the face image selected by the combination determining portion 136 is that of the player 503 newly sitting at the gaming table 501, and performs a rejection input of the approval, otherwise.

When the rejection input is performed from the dealer 502, the combination determining portion 136 displays the face image whose score is the next highest in the face recognition as a candidate on the touch panel 15. When the rejection input is performed, the combination determining portion 136 may perform reinforcement learning to the face recognition model using this face recognition result as a negative example.

The gaming table system 103 according to the third embodiment includes the reference image database 17, and the combination determining portion 136 refers to the reference image database 17 using the player ID identified by the ID identifying portion 134 to identify the reference image correlated to the player ID, thereby determining the combination of the player ID and the reference image. In this case, the combination determining portion 136 may not adopt the reference image identified by referring to the reference image database 17 as it is, may display it as a reference image candidate on the touch panel 15, and may combine the reference image with the player ID by an approval of the dealer 502.

In the gaming table system 102 according to the second embodiment, the ID identifying portion 134 performs image recognition using AI technology to the image of the player 503 sitting at the gaming table 501, thereby identifying the player ID of the player 503 sitting at the gaming table 501. The reference image database 17 may be added to this gaming table system 102. Then, the ID identifying portion 134 may not identify the single player ID by image recognition, and may extract a plurality of player ID candidates by image recognition.

The combination determining portion 136 refers to the reference image database 17 using the plurality of player ID candidates identified by the ID identifying portion 134, and extracts a plurality of reference image candidates from the reference image database 17. The touch panel 15 displays the extracted plurality of reference images and receives a selection from the dealer 502. The dealer 502 compares by observation the plurality of reference image candidates displayed on the touch panel 15 with the face of the player 503 actually and newly sitting at the gaming table 501, and selects a reference image on the touch panel 15.

By this configuration, even in the case where accuracy of facial recognition to identify the player ID of the player 503 is relatively low, it is possible to reduce the possibility of an identification mistake of the player ID due to an error of the facial recognition.

The second correlating portion 137 may also identify a player 503 who would be in the casino, makes the combination for the identified player 503 a candidate, and correlate the identified player ID and the player 503 in the image imaged by the second camera 12 with each other. The player 503 who would be in the casino may be, for example, a player 503 who is recognized at any gaming table 501 in the casino within a predetermined time period, a player 503 whose admission is confirmed at a casino gate within a predetermined time period, etc.

In the second embodiment, the ID identifying portion 134 performs image recognition to the image imaged by the second camera 12, thereby identifying the player ID of the player 503 sitting at the gaming table 501, but, in the case where the player ID cannot be identified by image recognition for the image since the quality of the image used for image recognition is not good, the ID identifying portion 134 may use another image imaged by the second camera 12 before or after the image to perform image recognition to the another image and identify the player ID of the player 503 shown therein.

As the case where the quality of the image is not good, for example, it is considered that a case where a front face image of the player 503 is not imaged, a case where the face of the player 503 is not in focus, and a case where there is an obstacle between the second camera 12 and the face of the player 503 and an occlusion is caused. In these cases, it is desirable to perform image recognition using another image imaged at a time little shifted, expecting that those factors of reducing the quality are no longer present, and identify the player ID.

### DESCRIPTION OF THE REFERENCES

- 11: First camera
- 12: Second camera
- 13: Arithmetic device
- 14: Card reader
- 15: Touch panel
- 16: Storage device
- 17: Reference image database
- 18: Betting area leader
- 101-105: Gaming table system
- 110: First image
- 120: Second image
- 131: Chip recognizing portion
- 132: Body recognizing portion
- 133: First correlating portion
- 134: ID identifying portion
- 135: Reference image acquiring portion
- 136: Combination determining portion
- 137: Second correlating portion
- 138: Chip operation player identifying portion
- 501: Gaming table
- 502: Dealer
- 503: Player
- 504: Chip tray
- 505: Player position
- 506: Gaming chip
- 507: Betting area

## Claims

1. A gaming table system comprising:
a first camera configured to image a chip placed on a gaming table in a casino;
a chip recognizing means configured to recognize a position, type, and number of chip on the gaming table by performing image recognition using AI technology to an image imaged by the first camera;
a second camera configured to image a player playing a game at the gaming table to generate an image;
a body recognizing means configured to recognize a body of the player playing the game on the gaming table by performing image recognition using AI technology to the image imaged by the second camera;
a first correlating means configured to correlate the chip recognized by the chip recognizing means and the player whose body is recognized by the body recognizing means with each other, based on the position of the chip recognized by the chip recognizing means and the body of the player recognized by the body recognizing means;
an ID identifying means configured to identify a player ID of the player sitting at the gaming table;
a reference image acquiring means configured to acquire a reference image of the player sitting at the gaming table;
a combination determining means configured to determine a combination of the player ID of the player identified by the ID identifying means and the reference image of the player acquired by the reference image acquiring means;
a second correlating means configured to identify the player ID of the player shown in the image imaged by the second camera based on a plurality of combinations determined by the combination determining means for a plurality of players sitting at the gaming table, and correlate the identified player ID and the player shown in the image imaged by the second camera with each other;
a chip operating player identifying portion configured to identify the player ID of the player operating the chip, based on a correlation between the player and the player ID by the second correlating means and a correlation between the player and the chip by the first correlating means; and
a recording means configured to store the player ID identified by the chip operating player identifying means and the type and number of chip recognized by the chip recognizing means so as to be in association with each other, or record the player ID identified by the chip operating player identifying means and a total amount based on the type and number of chip recognized by the chip recognizing means so as to be in association with each other.

2. The gaming table system according to claim 1, wherein the ID identifying means is configured to identify the player ID by reading the player ID of the player from a membership card of the player sitting at the gaming table.

3. The gaming table system according to claim 1, wherein the ID identifying means is configured to identify the player ID of the player sitting at the gaming table by performing image recognition using AI technology on an image imaging the player sitting at the gaming table.

4. The gaming table system according to claim 3, wherein the reference image acquiring means is configured to acquire the image used by the ID identifying means to identify the player ID, as the reference image for the player.

5. The gaming table system according to claim 3, wherein the ID identifying means is configured to use another image imaged by the second camera before or after the image to identify the player ID of the player in the another image, when the ID identifying means cannot identify the player ID of the player sitting at the gaming table by the image recognition.

6. The gaming table system according to claim 1, further comprising a database configured to store a player ID of a registered player and a reference image so as to be in association with each other,
wherein the combination determining means is configured to determine the combination of the player ID and the reference image by referring to the database using the player ID identified by the ID identifying means.

7. The gaming table system according to claim 1, wherein the reference image acquiring means is configured to acquire the reference image of the player by imaging the player whose player ID is identified by the ID identifying means.

8. The gaming table system according to claim 7, wherein
the reference image acquiring means is configured to acquire the reference image of the player by receiving a designation of the player from a dealer with respect to an image acquired by imaging the player whose player ID is identified by the ID identifying means and cutting out a partial image of the designated player, and
the combination determining means is configured to combine, for the player, the player ID identified by the ID identifying means with the reference image of the player acquired by the reference image acquiring means.

9. The gaming table system according to claim 7, wherein
the reference image acquiring means is configured to acquire, as the reference image of the player, the image of the player to which correlating by the second correlating means is not performed with respect to the image obtained by imaging the player whose player ID is identified by the ID identifying means, and
the combination determining means is configured to combine, for the player, the player ID identified by the ID identifying means with the reference image of the player obtained by the reference image acquiring means.

10. The gaming table system according to 1, further comprising a database configured to store a player ID of a registered player and a reference image so as to be in association with each other,
the ID identifying means is configured to identify the player ID of the player by reading a player ID of the player from a membership card of the player for a new registration when the player whose player ID and reference image are not stored in the database sits at the gaming table,
the reference image acquiring means is configured to acquire the reference image of the player by imaging the player whose player ID is identified by the ID identifying means,
the database is configured to store the player ID of the newly registered player identified by the ID identifying means and the reference image of the player acquired by the reference image acquiring means so as to be in association with each other, and
the combination determining means is configured to determine the combination by referring to the database for the player sitting at any gaming table in the casino after the player is registered in the database.

11. The gaming table system according to claim 1, wherein
the reference image acquiring means is configured to acquire a plurality of reference images for the same player, and
the combination determining means is configured to combine the plurality of reference images with the same player ID.

12. The gaming table system according to claim 1, wherein
the reference image acquiring means is configured to acquire a new reference image for the player after the combination determining means determines the combination of the player ID and the reference image for the player, and
the combination determining means is configured to replace the reference image to be combined with the player ID with the new reference image.

13. The gaming table system according to claim 1, wherein the combination determining means is configured to exclude a combination of a player away from the gaming table from the combination used for correlating by the second correlating means.

14. The gaming table system according to claim 1, wherein the second correlating means is configured to identify a player who would be in the casino, make the combination of the identified player a candidate, and correlate the identified player ID and the player shown in the image imaged by the second camera with each other.

15. The gaming table system according to claim 1, wherein the second correlating means is configured to identify the player ID of the player shown in the image imaged by the second camera based also on combinations determined by the combination determining means for a plurality of players sitting at another gaming table within the casino.

16. The gaming table system according to claim 1, further comprising a database configured to store a player ID of a registered player and a reference image so as to be in association with each other,
wherein the reference image acquiring means is configured to refer to the database to identify the reference image of the player in the image imaged by the second camera.

17. The gaming table system according to claim 1, wherein the second correlating means is configured to, in a case where the second correlating means cannot correlate the identified player ID and the player shown in the image imaged by the second camera, use another image imaged by the second camera before or after the image to correlate the player shown in the another image and the identified player ID with each other.

18. The gaming table system according to claim 17, further comprising:
a display means configured to display the reference image identified in the reference image acquiring means; and
an input receiving means configured to receive an input for approval or rejection from a dealer with respect to the reference image displayed on the display means,
wherein the reference image acquiring means is configured to acquire the reference image of the player by imaging the player for which the input for the rejection is received by the input receiving means, and store the reference image and the player ID of the player so as to be in association with each other in the database.

19. The gaming table system according to claim 1, wherein
the chip recognizing means includes: a first chip recognizing means configured to recognize the position of a chip from an image generated by imaging the chip on the gaming table; and a second chip recognizing means configured to recognize the type and number of a chip from an image generated by imaging the chip on the gaming table system.

20. The gaming table system according to claim 1, wherein
the chip recognizing means is configured to recognize the position, type, and number of a chip by reading the RFID tag embedded in the chip,
the body recognizing means is configured to recognize the position of the player playing the game on the gaming table based on the image, and
the first correlating means is configured to correlate the player and the chip with each other based on the position of the player recognized by the body recognizing means and the position of chip recognized by the chip recognizing means.
